# EUROPEAN PATENT APPLICATION

(11) **EP 3 957 454 A1**
(43) Date of publication of application: **23.02.2022**
(21) Application number: 20191878.6
(22) Date of filing: 20.08.2020
(51) Int. Cl.: B29B 17/02, B07C 5/342, G06N 20/00

(54) **METHOD AND SYSTEM FOR SEPARATING WASTE POLYMERS**

(71) Applicant: Covestro Deutschland AG, 51373 Leverkusen (DE); BT-Wolfgang Binder GmbH, 8200 Eggersdorf bei Graz (AT)
(72) Inventor: Grimm, Robert, 51375 Leverkusen (DE); Froebel, Sascha, 40591 Düsseldorf (DE); Dr. Schuck, Nikola Julia, 51375 Leverkusen (DE); Dr. Heinemann, Torsten, 42799 Leichlingen (DE); Ander, Katharina, 8200 Eggersdorf bei Graz (AT); Siegl, Franz, 7543 Neusiedl. b. Güssing (AT); Kings, Peter, 50672 Köln (DE)
(74) Representative: Levpat

(57) **Abstract**

Method for separating waste polymer foams, wherein for each polymer sample (1) of a supply stream (2) comprising polymer samples (1) from waste at least one respective primary spectrum (3) is recorded, wherein in a primary separation step (4), each polymer sample (1) of the supply stream (2) is classified by a primary classification algorithm (5), which primary classification algorithm (5) is based on machine learning, based on the respective primary spectrum (3) into a respective primary class (6a, b) of at least two primary classes (6a, b) in order to separate the supply stream (2) comprising polymer samples (1) into at least two primary streams (7a, b) according to the classification into the respective primary class (6a, b), wherein in a secondary separation step (8), each polymer sample (1) of a first primary stream (7a) is classified by a secondary classification algorithm (9), which secondary classification algorithm (9) is based on machine learning, into a respective secondary class (10a, b, c) of at least two secondary classes (10a, b, c) in order to separate the first primary stream (7a) into at least two secondary streams (11a, b, c) according to the classification into the respective secondary class (10a, b, c). The disclosure also relates to a corresponding system for separating waste polymers.

## Description

The invention is directed at a method for separating waste polymers and at a system for separating waste polymers.

Waste disposal and recycling is an important aspect for the chemical industry and in particular for polymers such as polyurethane foams. For proper disposal and recycling of polymers, it is important to identify specific components of each sample, since recycling processes are adapted to specific components in the material. The samples then have to be classified and sorted according to the specific components they contain. For such a classification, at least one spectrum of the polymer samples is recorded by means of spectroscopy and the obtained spectrum compared with a set of reference spectra. The most similar reference spectrum is determined and the components of the sample from which the reference spectrum was taken identified as the components of the polymer sample being analyzed.

However, especially in cases when samples of the same composition have a relatively large deviation in terms of their spectrum, a large number of reference spectra have to be pre-recorded in order to substantially cover the possible variations of the spectrum. Firstly, a large number of reference spectra makes the matching computationally intensive. Moreover, a high "density" of reference spectra of different compositions with some proximity or even overlap between spectra may lead to a high number of misclassifications.
Consequently, the object of the invention is to provide a method and a system for separating waste polymers which on the one hand can handle more complicated classification situations than are usually possible and which on the other hand are computationally efficient enough to allow for fast processing of the samples.

With respect to the method for separating waste polymers, the object of the invention is achieved by a method for separating waste polymers with the features of claim 1. With respect to the system for separating waste polymers, the object of the invention is achieved by a system for separating waste polymers with the features of claim 16.

The invention is based on the realization that firstly a classification algorithm based on machine learning may provide superior classification results than similarity matching and that secondly improved results in terms of computational efficiency and accuracy may be achieved when the classification is bifurcated into at least two steps. In this way, each individual classification step is less complex and the subsequent classification steps may rely on the information provided by the preceding classification steps. It is to be noted that here and in the following, the expression "algorithm" refers to a specific instance of an algorithm. In other words, two classification algorithms based on Random Forest would be considered different algorithms if they present two separate instances. In contrast, the kind of algorithm is here and in the following denoted as "type of algorithm". Therefore, the two classification algorithms from the preceding example would be considered to be the same type of algorithm.

Further, a different type of machine learning algorithm can be used at each classification step. One can thus choose, from a variety of possible types of algorithms, whichever types of algorithm performs best for a given classification step. Compared to using a single general classification type of algorithm, such a combination of specialized types of algorithms is likely to improve classification performance. The overall computational efficiency of the method and/or system is fine-tuned by using types of algorithms of low computational complexity in classification steps that can be solved by relatively simple algorithms (e.g. logistic regression); and by using highly accurate but also more computationally complex types of algorithms in classification steps where classification accuracy can be improved by such more complex types of algorithms (e.g. deep neural networks).

The method according to the invention is for separating waste polymers, wherein for each polymer sample of a supply stream comprising polymer samples from waste at least one respective primary spectrum is recorded. Thus, the polymer samples are all considered to be waste polymer. In principle, they may come from any waste polymer source. The supply stream comprising polymer samples may in principle be provided in an arbitrary manner. Preferably, the polymer samples have a respective diameter greater than 1 cm in at least two orthogonal spatial dimensions. In particular, the polymer samples may have a respective diameter greater than 2 cm in at least two orthogonal directions. The expression diameter here refers to the length or extent of the polymer sample in the corresponding dimension. The spatial dimensions here are orthogonal in the sense that they are orthogonal with respect to each other. In particular, the supply stream comprising polymer samples may be provided by a conveying apparatus for providing the supply stream comprising polymer samples.

The primary spectra recorded may in principle be any kind of spectra describing material properties for the respective polymer sample. Preferably, the at least one primary spectrum is recorded by spectroscopy, preferably using a contactless sensor, and in particular by infrared spectroscopy. The at least one primary spectrum may be recorded by a spectroscopy apparatus. The term "primary" only serves to distinguish this spectrum from potentially existing secondary spectra, which are further explained below. In particular, the at least one primary spectrum may be an infrared spectrum. Moreover, the at least one primary spectrum may in principle be recorded in an arbitrary manner. Preferably, the at least one primary spectrum is recorded by irradiating the respective polymer sample by a ray source. The at least one primary spectrum may in particular be recorded by mid-infrared spectroscopy, near-infrared spectroscopy, Raman spectroscopy, x-ray scattering, ultraviolet/visible, or fluorescence spectroscopy.

According to the method of the invention, in a primary separation step, each polymer sample of the supply stream is classified by a primary classification algorithm, which primary classification algorithm is based on machine learning, based on the respective at least one primary spectrum into a respective primary class of at least two primary classes in order to separate the supply stream comprising polymer samples into at least two primary streams according to the classification into the respective primary class. The primary classification algorithm may be any type of algorithm that is based on machine learning. In principle, this may comprise or consist of any kind of machine learning. Thus, based on an analysis of the at least one primary spectrum recorded for the particular polymer sample, that polymer sample is classified into a primary class and separated into a corresponding primary stream. The criteria for classifying each polymer sample into one of the primary classes may in principle be arbitrary.

Of those primary classes, there are at least two. The number of primary streams corresponds to the number of primary classes. Therefore, there are also at least two primary streams. The term "primary" with respect to the classes and the streams only serves to distinguish the classes and streams of the primary separation step from those of further separation steps. These are explained in the following.

According to the method of the invention, in a secondary separation step, each polymer sample of a first primary stream is classified by a secondary classification algorithm, which secondary classification algorithm is based on machine learning, into a respective secondary class of at least two secondary classes in order to separate the first primary stream into at least two secondary streams according to the classification into the respective secondary class. Thus, the separation of the secondary separation step pertains to at least one of the primary streams resulting from the preceding primary separation step, which primary stream is here denoted as the first primary stream. In other words, it may be that no secondary separation step is applied to any primary stream other than the first primary stream.

As observed for the primary classification algorithm, the secondary classification algorithm may in principle be any type of algorithm based on machine learning. This machine learning also may in principle be any kind of machine learning. Also for the secondary separation step, the criteria for classifying the respective polymer sample into one of the secondary classes may in principle be arbitrary.

As for the primary separation step, there are at least two secondary classes and an equal number of secondary streams as secondary classes. Therefore, there are also at least two secondary streams.

The basis for the secondary classification algorithm and therefore for the separation into one of the at least two secondary classes may in principle be arbitrary. According to a preferred embodiment of the method according to the invention, the classification into the respective secondary class is based on the respective at least one primary spectrum. In other words, it is based on the same at least one spectrum as the classification into the respective primary class.

According to a further preferred embodiment of the method according to the invention, for each polymer sample of the first primary stream, at least one respective secondary spectrum is recorded. In other words, an additional recording of at least one spectrum occurs. The term "secondary" only serves to distinguish this spectrum from the primary spectrum. It is further preferred that the classification into the respective secondary class is based on the respective at least one secondary spectrum.

Like for the at least one primary spectrum, the at least one secondary spectrum recorded may in principle be any kind of spectrum describing material properties for the respective polymer sample. Preferably, the at least one secondary spectrum is recorded by spectroscopy, preferably using a contactless sensor, and in particular by infrared spectroscopy. The at least one secondary spectrum may be recorded by a further spectroscopy apparatus. The term "secondary" only serves to distinguish this at least one spectrum from the aforementioned at least one primary spectrum. In particular, the at least one secondary spectrum may be an infrared spectrum. Moreover, the at least one secondary spectrum may in principle be recorded in an arbitrary manner. Preferably, the at least one secondary spectrum is recorded by detecting reflected or scattered rays when irradiating the respective polymer sample by a ray source. The at least one secondary spectrum may in particular be recorded by mid-infrared spectroscopy, near-infrared spectroscopy, Raman spectroscopy, x-ray scattering, ultraviolet/visible, or fluorescence spectroscopy.

According to a preferred embodiment of the invention, the supply stream comprising polymer samples is a supply stream comprising polyurethane samples. Accordingly, each polymer sample of the supply stream is a polyurethane sample. Further accordingly, the method for separating waste polymers is then a method for separating waste polyurethane samples. Preferably, each polyurethane sample is a polyurethane foam.

A preferred embodiment of the method according to the invention is characterized in that the respective at least one primary spectrum of each polymer sample is obtained by a different spectroscopy method than the respective at least one secondary spectrum of that polymer sample. In this way, different information may be obtained from the at least one primary spectrum and the at least one secondary spectrum, respectively.

A further preferred embodiment of the method according to the invention is characterized in that the supply stream comprising polymer samples is transported by a supply conveying device, that separating the supply stream comprising polymer samples into the at least two primary streams comprises transporting each polymer sample of at least one primary stream by a respective dedicated primary conveying apparatus for that primary stream and that each dedicated primary conveying apparatus transports the respective primary stream to a respective conveying location. It may be that for more than one primary stream such a dedicated primary conveying apparatus is used. In other words, in this case the primary streams are also physically separated and transported further to a respective different destination. It may also be that separating the supply stream comprising polymer samples into the at least two primary streams comprises sorting out each polymer sample of at least one further primary stream into a collection container. In other words, the polymer samples of the at least one primary stream are transported to separate conveying locations while the polymer samples of the at least one further primary stream are sorted out into a collection container. The polymer samples sorted out then do not need to be processed further.

According to a preferred embodiment of the method according to the invention, the at least two primary classes comprise an MDI class and a TDI class, wherein each polymer sample of the supply stream is classified into the MDI class when the primary classification algorithm identifies that polymer sample as comprising chemical products of monomeric and/or polymeric methylene diphenyl diisocyanates and wherein each polymer sample of the supply stream is classified into the TDI class when the primary classification algorithm identifies that polymer sample as comprising chemical products of toluene diisocyanates. Methylene diphenyl diisocyanate is denoted also as MDI. Toluene diisocyanate is also denoted as TDI. In other words, the primary separation step comprises a separation according to the isocyanate used for the production of the respective polymer sample. It is to be noted that the first primary stream may be the primary stream corresponding to the MDI class or the primary stream corresponding to the TDI class.

According to a further preferred embodiment of the method according to the invention, each polymer sample of the first primary stream is classified by the secondary classification algorithm based on a type of polyol mixture used for the production of that polymer sample. In particular when each polymer sample of the supply stream is a polyurethane foam, it is preferred that each polyurethane foam of the first primary stream is classified by the secondary classification algorithm based on a type of polyol mixture used for the production of that polyurethane foam..

It is preferred that the first primary stream corresponds to the TDI class. In other words, the first primary stream comprises polymer sample that comprise chemical products of toluene diisocyanates. In this way, the secondary classification algorithm can provide a more precise sub-determination. Because the primary classification algorithm already identified the polymer sample as comprising TDI, the secondary classification algorithm can proceed from this information and therefore work with fewer unknown variables. This makes the classification by the secondary classification algorithm less resource-intensive in terms of computational resources. In addition, the secondary classification algorithm can proceed from this information and thereby focus on a more restricted classification task. Instead of using a single general machine learning algorithm for all classification steps, one can then increase classification accuracy by using a type of algorithm that is uniquely suited for dealing with each particular, narrowly defined classification step.

A preferred embodiment of the method according to the invention is characterized in that the at least two secondary classes comprise a high-resilience TDI class and/or a viscoelastic TDI class. In other words, the secondary classification algorithm has at least these two classes to classify the polymer sample. Here it is further preferred that each polyurethane sample of the first primary stream is classified into the high-resilience TDI class when the secondary classification algorithm has identified that polyurethane sample as comprising high-resilience polyurethane foam. In particular, each polyurethane sample of the first primary stream is classified into the high-resilience TDI class when the secondary classification algorithm has identified that polyurethane sample as comprising chemical products of polyols for producing high-resilience polyurethane foams. Polyols for producing high-resilience polyurethane foams are characterized by predominantly primary OH groups, with an OH number between 27 and 35. It is also preferred that each polyurethane sample of the first primary stream is classified into the viscoelastic TDI-class when the secondary classification algorithm has identified that polyurethane sample as comprising viscoelastic polyurethane foam. In particular, each polyurethane sample of the first primary stream is classified into the viscoelastic TDI-class when the secondary classification algorithm has identified that polyurethane sample as comprising chemical products of polyols for producing viscoelastic polyurethane foams. Polyols for producing viscoelastic polyurethane foams are complex polyols mixtures, with an OH number between 100 and 200 KOH/g.

A preferred embodiment of method according to the invention is characterized in that the at least two secondary classes comprise a conventional TDI class and/or an other TDI class. In other words, the secondary classification algorithm has at least these two classes to classify the polymer sample. The other TDI class may be a default class which may be used for any polymer samples in the TDI class but not classified into any of the other secondary classes. A further preferred embodiment of the method according to the invention is characterized in that each polyurethane sample of the first primary stream is classified into the conventional TDI class when the secondary classification algorithm has identified that polyurethane sample as comprising conventional polyurethane foam. In particular, each polyurethane sample of the first primary stream is classified into the conventional TDI class when the secondary classification algorithm has identified that polyurethane sample as comprising chemical products of polyols for producing conventional polyurethane foams. Polyols for producing conventional polyurethane foams are characterized by predominantly secondary OH groups, with an OH number between 42 and 56 mg KOH/g. It is also preferred that each polyurethane sample of the first primary stream is classified into the other TDI class when the secondary classification algorithm failed to classify that polyurethane sample into the high-resilience TDI class, the viscoelastic TDI class or the conventional TDI class.

In principle, the secondary separation step may consist of a single classification step and therefore of a single separation step. That single classification step may comprise the classification into an arbitrarily large number of secondary classes. Yet according to a preferred embodiment of the method according to the invention, the secondary separation step comprises a plurality of successive secondary separation sub-steps until each polymer sample of the primary stream is classified into a respective secondary class and that in each secondary separation sub-step the secondary classification algorithm performs a binary classification into one of two preliminary secondary classes. In other words, the secondary classification step proceeds in sub-steps of binary classifications. Such a binary classification scheme lends itself to the selection of different algorithms for each binary sub-step, so that each algorithm is especially well-suited for its respective classification step. Preliminary secondary classes may correspond either to actual classifications or just to some preliminary and temporary stages in a decision tree prior to any definitive classification.

In the case of successive secondary separation sub-steps, it is further preferred that the secondary classification algorithm comprises different sub-algorithms, each preferably based on machine learning, for each binary classification of the secondary separation sub-steps. In this way, it is possible for each algorithm to be especially well-suited for its respective classification step. In other words, it is preferred that each secondary separation sub-step is performed by that type of machine learning algorithm which achieves the highest possible accuracy for the binary classification it is performing. Such an ensemble of specialized algorithms, each responsible for a binary classification step, is likely to achieve higher overall classification accuracy than a non-binary system that directly classifies each polymer or polyurethane sample into one of several classes.

Such a subdivision into sub-steps permits the use of pipelining in the secondary classification step. Pipelining here corresponds to the meaning of the term in computing. According to that meaning, in a process that is subdivided processing for the next data unit begins in the first subdivision when the previous data unit proceeds to the second subdivision. Thus, it is preferred that when each polymer sample of the primary stream has completed a first secondary separation sub-step and while that polymer sample is being classified in the subsequent second secondary sub-step, the respective next polymer sample of the primary stream undergoes classification in the first secondary separation sub-step.

Such a subdivision may also exist for the primary separation step. According to a further preferred embodiment of the method according to the invention, the primary separation step comprises a plurality of successive primary separation sub-steps until each polymer sample of the supply stream is classified into a respective primary class and that in each primary separation sub-step the primary classification algorithm performs a binary classification into one of two preliminary primary classes. Moreover, pipelining may also be used in the primary separation step. It is therefore preferred that when each polymer sample of the supply stream has completed a first primary separation sub-step and while that polymer sample is being classified in the subsequent second primary sub-step, the respective next polymer sample of the supply stream undergoes classification in the first primary separation sub-step.

Like for the case of successive secondary separation sub-steps, in the case of successive primary separation sub-steps it is further preferred that the primary classification algorithm comprises a different sub-algorithm, each preferably based on machine learning, for each binary classification of the primary separation sub-steps. One can then create an ensemble of different classification algorithms, each hand-picked for a specific binary classification task. Such an ensemble is likely to reach better performance than a single general machine learning algorithm.

It may be that more than one primary stream from the primary separation step undergoes a further classification. A further preferred embodiment of the method according to the invention is therefore characterized in that in a further secondary separation step, each polymer sample of a further primary stream is classified by a further secondary classification algorithm into a respective further secondary class of at least two further secondary classes in order to separate the further primary stream into at least two further secondary streams according to the classification into the respective further secondary class. The further primary stream may be any primary stream other than the first primary stream.

In principle, the primary classification algorithm may be based on the same type of machine learning algorithm as the secondary classification algorithm, which means that the two machine learning algorithms are of the same type. According to a preferred embodiment of the method according to the invention, the type of the primary classification algorithm is different from the type of the secondary classification algorithm. It is preferred that the type of the primary classification algorithm is logistic regression, random forest or a neural network. It may also be that the type of the secondary classification algorithm is logistic regression, random forest or a neural network.

In addition to being based on machine learning, the classification algorithms may also employ additional or supplementary classification approaches. It may for example be that a spectrum to be classified substantially exactly correspond to a known spectrum. Therefore according to a further preferred embodiment of the method according to the invention, the primary classification algorithm performs a similarity matching of the respective primary spectrum with a database of reference spectra and, if a match with a reference spectrum in the database is found, classifies the respective polymer sample according to the match.

The system according to the invention is for separating waste polymers. The system according to the invention comprises a spectroscopy apparatus configured to record for each polymer sample of a supply stream comprising polymer samples from waste at least one respective primary spectrum.

The system according to the invention further comprises a computing arrangement on which a primary classification algorithm based on machine learning and configured to classify each polymer sample of the supply stream into a respective primary class of at least two primary classes in a primary separation step is executed, which classification is based on the respective primary spectra, in order to separate the supply stream comprising polymer samples into at least two primary streams according to the classification into the respective primary class.

In the system according to the invention, in a secondary separation step, a secondary classification algorithm based on machine learning and executed on the computing arrangement is configured to classify each polymer sample of a first primary stream into a respective secondary class of at least two secondary classes in order to separate the primary stream into at least two secondary streams according to the classification into the respective secondary class.

Preferably, the system according to the invention comprises the supply conveying device, the distinct primary conveying apparatuses and/or the further spectroscopy apparatus.

Preferred embodiments, features and advantages of the system according to the invention correspond to those of the method according to the invention and vice versa.

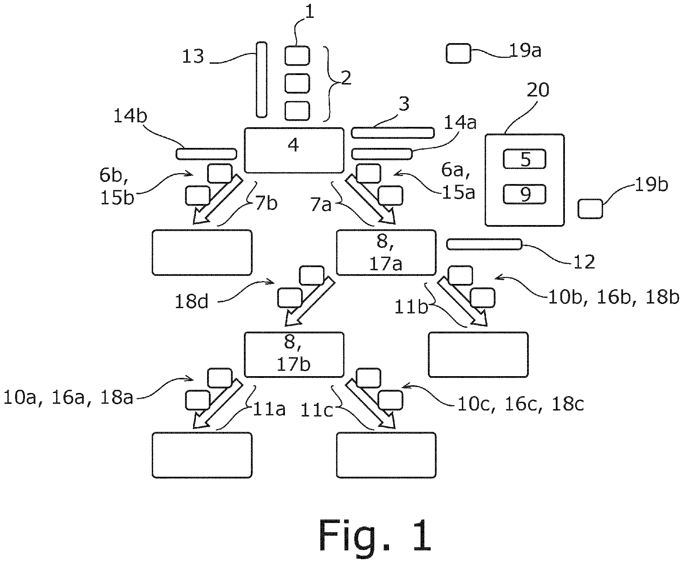

Further advantageous and preferred features are discussed in the following description with respect to the Figures. In the following it is shown in
- Fig. 1: a schematic diagram of an embodiment of a system according to the invention to perform an embodiment of the method according to the invention.

As shown in Fig. 1, waste polymers which here are polyurethane foams are provided by a supply stream 2 of polymer samples 1, which here are polyurethane samples. The polymer samples 1 have been collected for recycling and are understood to vary in composition. In particular, a supply conveying device 13, which is here a first conveyor belt, provides the supply stream 2.

A spectroscopy apparatus 19a uses infrared spectroscopy and records for each polymer sample 1 a primary spectrum 3 associated with that polymer sample 1. That primary spectrum 3 then undergoes the pre-processing. In Fig. 1, only a single such primary spectrum 3 is shown.

In the following primary separation step 4, each polymer sample 1 is classified by a primary classification algorithm 5 based on the primary spectrum 3 of that polymer sample 1. The primary classification algorithm 5 has been trained by machine learning. In particular, logistic regression as supervised learning was used to train the primary classification algorithm 5. The primary classification algorithm 5 serves to distinguish polymer samples 1 with chemical products of monomeric and/or polymeric methylene diphenyl diisocyanates (MDI) from those with chemical products of toluene diisocyanates (TDI). The primary classification algorithm 5 is executed on a computing arrangement 20.

Any polymer sample 1 that is found to comprise TDI is classified in that primary class 6a which is the TDI class 15a. The polymer samples 1 thus classified remain on the same first conveyor belt, which from this point in the process can be understood as a first primary conveying apparatus 14a delivering a first primary stream 7a, namely the stream of those polymer samples 1 classified in the TDI class 15a.

Any polymer sample 1 that is found to comprise MDI is classified into that primary class 6b which is the MDI class 15b. The polymer samples 1 thus classified are moved to a second conveyor belt, which constitutes a second primary conveying apparatus 14b. These polymer samples 1 form a second primary stream 7b which is then removed from the process at hand.

Subsequently, a further spectroscopy apparatus 19b uses near-infrared spectroscopy and records for each polymer sample 1 of the first primary stream 7a a secondary spectrum 12 associated with that polymer sample 1. That primary spectrum 12 then also undergoes pre-processing. Like for the primary spectrum 3, in Fig. 1, only a single such primary spectrum 12 is shown.

The following secondary separation step 8 is divided into a first secondary separation sub-step 17a and a second secondary separation sub-step 17b. In the first secondary separation sub-step 17a, a secondary classification algorithm 9, which is also executed on the computing apparatus 20, classifies each polymer sample 1 of the first primary stream 7a into the preliminary class 18b if it comprises high-resilience polyurethane foams. The secondary algorithm 9 has been trained using machine learning. In particular, supervised learning in the form of random forest.

This preliminary classification is also the final classification of the secondary separation step 8 into that secondary class 10b which is the high-resilience TDI class 16b. These polymer samples 1 form the secondary stream 11b.

All other polymer samples 1 are classified into the preliminary class 18d which corresponds to other TDI. These polymer samples 1 undergo the second secondary separation sub-step 17b. Here the secondary classification algorithm 9, again based on the secondary spectrum 12, classifies those polymer samples 1 comprising viscoelastic polyurethane foams into the secondary class 10a, which is the viscoelastic TDI class 16a. These polymer samples 1 then form the secondary stream 11a. The polymer samples 1 comprising conventional polyurethane foams are classified into the secondary class 10c, which is the conventional TDI class 16c, thereby forming the secondary stream 11c.

## Claims

1. Method for separating waste polymers, wherein for each polymer sample (1) of a supply stream (2) comprising polymer samples (1) from waste at least one respective primary spectrum (3) is recorded, wherein in a primary separation step (4), each polymer sample (1) of the supply stream (2) is classified by a primary classification algorithm (5), which primary classification algorithm (5) is based on machine learning, based on the respective at least one primary spectrum (3) into a respective primary class (6a, b) of at least two primary classes (6a, b) in order to separate the supply stream (2) comprising polymer samples (1) into at least two primary streams (7a, b) according to the classification into the respective primary class (6a, b), wherein in a secondary separation step (8), each polymer sample (1) of a first primary stream (7a) is classified by a secondary classification algorithm (9), which secondary classification algorithm (9) is based on machine learning, into a respective secondary class (10a, b, c) of at least two secondary classes (10a, b, c) in order to separate the first primary stream (7a) into at least two secondary streams (11a, b, c) according to the classification into the respective secondary class (10a, b, c).

2. Method according to claim 1, **characterized in that** the classification into the respective secondary class (10a, b, c) is based on the respective at least one primary spectrum (3).

3. Method according to claim 1, **characterized in that** for each polymer sample (1) of the first primary stream (7a) at least one respective secondary spectrum (12) is recorded, preferably, that the classification into the respective secondary class (10a, b, c) is based on the respective at least one secondary spectrum (12).

4. Method according to claim 3, **characterized in that** the respective at least one primary spectrum (3) of each polymer sample (1) is obtained by a different spectroscopy method than the respective at least one secondary spectrum (12) of that polymer sample (1).

5. Method according to one of claims 1 to 4, **characterized in that** the supply stream comprising polymer samples is a supply stream comprising polyurethane samples, preferably, that each polymer sample of the supply stream is a polyurethane sample.

6. Method according to one of claims 1 to 5, **characterized in that** the supply stream (2) comprising polymer samples (1) is transported by a supply conveying device (13), that separating the supply stream (2) comprising polymer samples (1) into the at least two primary streams (7a, b) comprises transporting each polymer sample (1) of at least one primary stream (7a, b) by a respective dedicated primary conveying apparatus (14a, b) for that primary stream (7a, b) and that each dedicated primary conveying apparatus (14a, b) transports the respective primary stream (7a, b) to a respective conveying location.

7. Method according to one of claims 1 to 6, **characterized in that** the at least two primary classes (6a, b) comprise an MDI class (15a) and a TDI class (15b), that each polymer sample (1) of the supply stream (2) is classified into the MDI class (15a) when the primary classification algorithm (5) identifies that polymer sample (1) as comprising chemical products of monomeric and/or polymeric methylene diphenyl diisocyanates and that each polymer sample (1) of the supply stream (2) is classified into the TDI class (15a) when the primary classification algorithm (5) identifies that polymer sample (1) as comprising chemical products of toluene diisocyanates.

8. Method according to one of claims 1 to 7, **characterized in that** each polymer sample (1) of the first primary stream (7a) is classified by the secondary classification algorithm (9) based on a type of polyol mixture used for the production of that polymer sample (1).

9. Method according to claim 8, **characterized in that** the at least two secondary classes (10a, b, c) comprise a high-resilience TDI class (16b) and/or a viscoelastic TDI class (16a), preferably, that each polyurethane sample of the first primary stream (7a) is classified into the high-resilience TDI class (16b) when the secondary classification algorithm (9) has identified that polyurethane sample as comprising high-resilience polyurethane foam, further preferably, that each polyurethane sample of the first primary stream (7a) is classified into the viscoelastic TDI-class (16a) when the secondary classification algorithm (9) has identified that polurethane sample as comprising viscoelastic polyurethane foam.

10. Method according to claim 8 or 9, **characterized in that** the at least two secondary classes (10a, b, c) comprise a conventional TDI class (16b) and/or an other TDI class, preferably, that each polyurethane sample (1) of the first primary stream (7a) is classified into the conventional TDI class (16c) when the secondary classification algorithm (9) identified that polyurethane sample as comprising conventional polyurethane foam, preferably, that each polyurethane sample of the first primary stream (7a) is classified into the other TDI class when the secondary classification algorithm (9) failed to classify that polyurethane sample (1) into the high-resilience TDI class (16b), the viscoelastic TDI class (16a) or the conventional TDI class (16c).

11. Method according to one of claims 1 to 10, **characterized in that** the secondary separation step (8) comprises a plurality of successive secondary separation sub-steps (17a, b) until each polymer sample (1) of the primary stream (7a) is classified into a respective secondary class (10a, b, c) and that in each secondary separation sub-step (17a, b) the secondary classification algorithm (9) performs a binary classification into one of two preliminary secondary classes (18a, b, c, d).

12. Method according to one of claims 1 to 11, **characterized in that** the primary separation step (4) comprises a plurality of successive primary separation sub-steps until each polymer sample (1) of the supply stream (2) is classified into a respective primary class (6a, b) and that in each primary separation sub-step the primary classification algorithm (5) performs a binary classification into one of two preliminary primary classes.

13. Method according to one of claims 1 to 12, **characterized in that** in a further secondary separation step, each polymer sample (1) of a further primary stream (7b) is classified by a further secondary classification algorithm into a respective further secondary class of at least two further secondary classes in order to separate the further primary stream (7b) into at least two further secondary streams according to the classification into the respective further secondary class.

14. Method according to one of claims 1 to 13, **characterized in that** the type of the primary classification algorithm (5) is different from the type of the secondary classification algorithm, preferably, that the type of the primary classification algorithm (5) is logistic regression, random forest or a neural network.

15. Method according to one of claims 1 to 14, **characterized in that** the primary classification algorithm (5) performs a similarity matching of the respective primary spectrum (3) with a database of reference spectra and, if a match with a reference spectrum in the database is found, classifies the respective polymer sample (1) according to the match.

16. System for separating waste polymers, the system comprising a spectroscopy apparatus (19a) configured to record for each polymer sample (1) of a supply stream (2) comprising polyurethane samples (1) from waste at least one respective primary spectrum (3), further comprising a computing arrangement (20) on which a primary classification algorithm (5) based on machine learning and configured to classify each polymer sample (1) of the supply stream (2) into a respective primary class (6a, b) of at least two primary classes (6a, b) in a primary separation step (4) is executed, which classification is based on the respective at least one primary spectrum (3), in order to separate the supply stream (2) comprising polymer samples (1) into at least two primary streams (7a, b) according to the classification into the respective primary class (6a, b), wherein in a secondary separation step (8), a secondary classification algorithm (9) based on machine learning and executed on the computing arrangement (20) is configured to classify each polymer sample (1) of a first primary stream (7a) into a respective secondary class of at least two secondary classes (10a, b, c) in order to separate the primary stream (7a) into at least two secondary streams (11a, b, c) according to the classification into the respective secondary class (10a, b, c).
